# EUROPÄISCHE PATENTANMELDUNG

(11) **EP 4 470 797 A1**
(43) Veröffentlichungstag der Anmeldung: **04.12.2024**
(21) Anmeldenummer: 24173703.0
(22) Anmeldetag: 02.05.2024
(51) Int. Cl.: B60C 11/03, B60C 11/11, B60C 11/12

(54) **FAHRRADREIFEN**

(30) Priorität: 01.06.2023 DE 102023205117; 09.06.2023 DE 102023205388
(71) Anmelder: Continental Reifen Deutschland GmbH, 30175 Hannover (DE)
(72) Erfinder: Sudikatis, Florian, 30175 Hannover (DE); Engert, Alexander, 30175 Hannover (DE)
(74) Vertreter: Continental Corporation

(57) **Zusammenfassung**

Fahrradreifen (1) mit einem laufrichtungsgebunden gestalteten profilierten Laufstreifen (2) mit einer Profilierung aus Profilpositiven (5, 5') mit Außenflächen (5c, 5'c, 6c), die beim Abrollen des Reifens mit dem Untergrund in Kontakt kommen, und aus zwischen den Profilpositiven (5, 5') befindlichen Profilnegativen (2a), wobei Profilpositive (5, 5') vorhanden sind, auf deren Außenflächen (5c, 5'c, 6c) jeweils zumindest ein Einschnitt (7, 8) ausgebildet ist, welcher einen Einschnittgrund (7a, 8a) und zwei Einschnittwände (9, 10, 11, 12) aufweist.

Es sind Profilpositive (5, 5', 6) mit Einschnitten (7, 8) erster Art und/oder Profilpositive (5, 5', 6) mit Einschnitten (7, 8) zweiter Art vorhanden,
wobei bei Einschnitten (7, 8) erster Art jeweils an der laufstreifeninnenseitigen Kante (9'b, 11'b) und bei Einschnitten (7, 8) zweiter Art an der auslaufenden Kante eine Fase (9b, 11b) ausgebildet ist
oder
bei Einschnitten (7, 8) erster Art jeweils die an die laufstreifeninnenseitige Kante (9'b, 11'b) und bei Einschnitten (7, 8) zweiter Art jeweils die an die auslaufende Kante (9'b, 11'b) anschließende Einschnittwand (9, 11) insgesamt als eine Schrägfläche ausgebildet ist.

## Beschreibung

Die Erfindung betrifft einen Fahrradreifen mit einem laufrichtungsgebunden gestalteten profilierten Laufstreifen mit einer Profilierung aus Profilpositiven mit Außenflächen, die beim Abrollen des Reifens mit dem Untergrund in Kontakt kommen, und aus zwischen den Profilpositiven befindlichen Profilnegativen, wobei Profilpositive vorhanden sind, auf deren Außenflächen jeweils zumindest ein Einschnitt ausgebildet ist, welcher einen Einschnittgrund und zwei Einschnittwände aufweist.

Fahrradreifen weisen üblicherweise profilierte Laufstreifen auf, die in unterschiedlichen Varianten ausgeführt sein können. Beispielsweise sind Stollenprofile in unterschiedlichen Ausführungsvarianten bekannt, die insbesondere für die Fahrradkategorien GRAVEL oder MTB vorgesehen und geeignet sind. Fahrradreifen mit Stollenprofilen sind vor allem für den Off-Road-Einsatz auf unterschiedlichen, unbefestigten, losen oder rutschigen Untergründen, wie Forstwegen, Waldwegen usw. geeignet und besitzen die für solche Untergründe vorteilhaften Griffeigenschaften. Einige solcher Stollenprofile weisen Fahrradreifen, die auf der Webseite der Firma Continental abgebildet sind auf, beispielsweise die unter https://www.continental-reifen.de/b2c/bicycle/search-results.html?searchMode=sbs&pogSegment2MappingDTacs=Gravel (abgerufen am 28.04.2023) aufzufindenden Fahrradreifen. Ein Stollenprofil weist etwa auch der in der Fig. 1 der DE 29509996 U1 gezeigte Fahrradreifen auf.

Grundsätzlich sind Kanten an den beim Abrollen des Reifens mit dem Untergrund in Kontakt kommenden Außenflächen der vorgesehen Profilpositive sowie an den Außenflächen ausgebildete Einschnitte für einen guten Griff und einen möglichst formschlüssigen Kraftschluss besonders vorteilhaft. Je mehr Kanten vorhanden sind, umso besser wird der Griff. Die bekannten Einschnitte weisen von ihrem Einschnittgrund ausgehend Einschnittwände auf, die sich durchgehend und entweder senkrecht zur Außenfläche oder unter einem spitzen Winkel von insbesondere bis zu 15° zur Außenfläche geneigt, unter Verbreiterung des Einschnittes Richtung Außenfläche, erstrecken. Bei einer entsprechenden Matschkonsistenz des Untergrunds werden die bekannten Einschnitte oft vollständig zugesetzt. Bei Einschnitten, die in Umfangsrichtung oder unter Winkeln kleiner 45° zur Umfangsrichtung orientiert sind, schließen sich die Einschnitte unter Querbelastung, also beispielsweise bei Kurvenfahrt, sodass die Einschnittkanten an den Außenflächen nicht mehr oder nur noch unzulänglich einen Beitrag zum Griff leisten können.

Der Erfindung liegt daher die Aufgabe zugrunde, bei einem Fahrradreifen mit einem laufrichtungsgebunden gestalteten profilierten Laufstreifen die Griffperformance zu verbessern.

Gelöst wird die gestellte Aufgabe erfindungsgemäß dadurch, dass Profilpositive mit Einschnitten erster Art und/oder Profilpositive mit Einschnitten zweiter Art vorhanden sind, wobei sich die Einschnitte erster Art zur Umfangsrichtung des Laufstreifens unter einem Winkel von bis zu 45° erstrecken und an der Außenfläche jeweils eine laufstreifeninnenseitige, passive Kante und eine laufstreifenaußenseitige, aktive Kante aufweisen, wobei sich die Einschnitte zweiter Art zur Umfangsrichtung unter einem Winkel > 45° erstrecken und an der Außenfläche jeweils eine beim Abrollen des Reifens bei Vorwärtsfahrt zuerst in den Untergrund eintretende einlaufende aktive Kante und eine auslaufende passive Kante aufweisen, wobei
entweder
bei Einschnitten erster Art jeweils an der laufstreifeninnenseitigen Kante und bei Einschnitten zweiter Art an der auslaufenden Kante eine Fase ausgebildet ist oder
bei Einschnitten erster Art jeweils die an die laufstreifeninnenseitige Kante und bei Einschnitten zweiter Art jeweils die an die auslaufende Kante anschließende Einschnittwand insgesamt als eine Schrägfläche ausgebildet ist,
wobei die Fasen und die Schrägflächen jeweils unter einem Winkel von 30° bis 60° zu einer Senkrechten auf die jeweilige Außenfläche verlaufen.

Bei laufrichtungsgebunden ausgeführten Laufstreifen wirkt bei Einschnitten erster Art die laufstreifenaußenseitigen Kanten und bei Einschnitten zweiter Art die einlaufenden Kanten jeweils als "aktive" Kante, die anderen gegenüberliegende Kanten als "passive" Kanten. Durch die Erfindung wird bei bestimmten Belastungen beim Fahren oder Bremsen jeweils die aktive Kante des Einschnitts "freigelegt" und ihre Wirkung zur Erzeugung von Griff erhöht. Darüber hinaus wird vermieden, dass die aktive Kante bei einer Verformung des Profilpositivs in einer Richtung im Wesentlichen senkrecht zur Längserstreckung des jeweiligen Einschnitts vollständig verdeckt wird. Laufstreifen mit Profilpositiven, die gemäß der Erfindung ausgeführt sind, weisen daher einen deutlich verbesserten Griff auf.

Für besonders gute Griffeigenschaften ist es vorteilhaft, wenn die Einschnitte, in Draufsicht betrachtet, an der Außenfläche parallel zueinander und gerade verlaufende Kanten aufweisen.

Für das erwähnte "Freilegen" der aktiven Kanten der Einschnitte ist es von besonderem Vorteil, wenn die Einschnitte an der Außenfläche eine Breite von 0,80 mm bis 1,20 mm aufweisen.

Bei einer weiteren bevorzugten Ausführung sind im Laufstreifen Profilpositive vorhanden, an welchen die Einschnitte die Außenflächen durchqueren. Bei einer weiteren bevorzugten Ausführung sind im Laufstreifen Profilpositive vorhanden, an welchen die Einschnitte innerhalb der Außenflächen enden. Durchquerende Einschnitte sind insbesondere bei Laufstreifen, die als Profilpositive Stollen aufweisen, von Vorteil, innerhalb der Profilpositive endende Einschnitte sind insbesondere in solchen Laufstreifenprofilen vorteilhaft ausbildbar, deren Profilpositive eine unregelmäßige Gestalt aufweisen und die insbesondere von anderen Profilpositiven durch Rillen getrennt sind.

Bevorzugt sind ferner Einschnitte erster Art in schulterseitigen Profilpositiven ausgebildet. Dadurch wird schulterseitig vor allem bei Kurvenfahrt ein guter Griff des Laufstreifens am Untergrund sichergestellt.

Gemäß einer weiteren bevorzugten Ausführung verlaufen die Einschnitte in schulterseitigen Profilpositiven derart bezüglich der Umfangsrichtung geneigt, dass die laufstreifeninnenseitigen Enden ihrer Kanten beim Abrollen des Reifens bei Vorwärtsfahrt zuerst in den Untergrund eintreten. Diese Ausgestaltung sorgt bei laufrichtungsgebunden gestalteten Laufstreifen für besonders gute Griffeigenschaften.

Gemäß einer weiteren bevorzugten Ausführung sind Einschnitte zweiter Art in mittigen Profilpositiven ausgebildet. Bei diesen Einschnitten ist jeweils die Kante, mit welcher der Reifen beim Abrollen bei Vorwärtsfahrt zuerst in den Untergrund eintritt, die aktive Kante, also jene Kante, die keine Fase aufweist. Diese Maßnahme ist für die Griffeigenschaften bei Bremsvorgängen besonders vorteilhaft.

Bei einer weiteren vorteilhaften Ausgestaltung von innerhalb der Außenflächen endenden Einschnitten ist vorgesehen, dass ihr Einschnittgrund entlang der Längserstreckung der Einschnitte bezüglich der Einschnittmitte symmetrisch bogenförmig verläuft, derart, dass der Einschnittgrund an den beiden Einschnittenden an der Außenfläche endet bzw. ausläuft. Material aus dem Untergrund, das gegebenenfalls in die Einschnitte eindringt, wird bei einer derartigen Ausführung besonders leicht wieder herausbefördert.

Bei derart ausgebildeten Einschnitten ist es ferner von Vorteil, wenn die Fasen, welche an Kanten von innerhalb der Außenflächen endenden Einschnitten ausgebildet sind, jeweils an den Einschnittenden gemeinsam mit dem Einschnittgrund an der Außenfläche auslaufen. Auch diese Maßnahme trägt zu einem Herausbefördern von in die Einschnitte eingedrungenem Material bei.

Für die Wirkung der Fasen ist es ferner von Vorteil, wenn sie jeweils von der Außenfläche in senkrechter Richtung ermittelt bis in eine maximale Tiefe von 0,30 mm bis 0,50 mm reichen.

Die Einschnitte selbst reichen vorteilhafterweise von den Außenflächen in senkrechter Richtung ermittelt jeweils bis in eine maximale Tiefe von 0,80 mm bis 2,00 mm, insbesondere von 1,00 mm bis 1,50 mm.

Bei einer weiteren bevorzugten Ausführung verläuft die der Schrägfläche bzw. der mit der Fase versehene Einschnittwand gegenüberliegende Einschnittwand senkrecht zur Außenfläche oder unter einem Winkel von insbesondere bis zu 15° zu einer Senkrechten auf die Außenfläche. Von Vorteil ist es ferner, wenn an die Fase ein bis zu einem Einschnittgrund reichender Wandabschnitt anschließt, welcher senkrecht zur Außenfläche oder ebenfalls unter einem Winkel von insbesondere bis zu 15° zu einer Senkrechten auf die Außenfläche verläuft. Diese Maßnahmen unterstützen die Stabilität der Profilpositive.

Von besonderem Vorteil ist eine Ausgestaltung des Laufstreifenprofils als Stollenprofil, bei welchem die Profilpositive voneinander beabstandete Stollen sind, zu welchen zum Beispiel Schulterstollen und mittige Stollen gehören, wobei die Profilnegative von einer zwischen den Stollen vorhandenen Laufstreifenbasisfläche gebildet sind, wobei die Stollen jeweils eine parallel oder im Wesentlichen parallel zur Laufstreifenbasisfläche verlaufende, die Außenfläche bildende Deckfläche aufweisen. Insbesondere in Stollenprofilen ist es besonders vorteilhaft, Einschnitte, wie beschrieben, auszubilden, um unter allen Fahrbedingungen möglichst optimale Griffeigenschaften, etwa auf losem Untergrund, auf Forstwegen, Waldwegen und dergleichen, sicherzustellen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Umfangsabschnitt eines Fahrradreifens in Schrägansicht, jedoch ohne die zum Unterbau gehörenden Bauteile
Fig. 2 eine vergrößerte Ansicht eines Stollens aus dem Laufstreifen des Reifens gemäß Fig. 1,
Fig. 2a eine Schnittansicht gemäß der Linie IIa-IIa der Fig. 2,
Fig. 3 eine Ansicht einer weiteren Ausführungsform eines Stollens,
Fig. 4 eine Schnittansicht gemäß der Linie IV - IV der Fig. 3 und
Fig. 5 eine Schnittansicht gemäß der Linie V - V der Fig. 3.

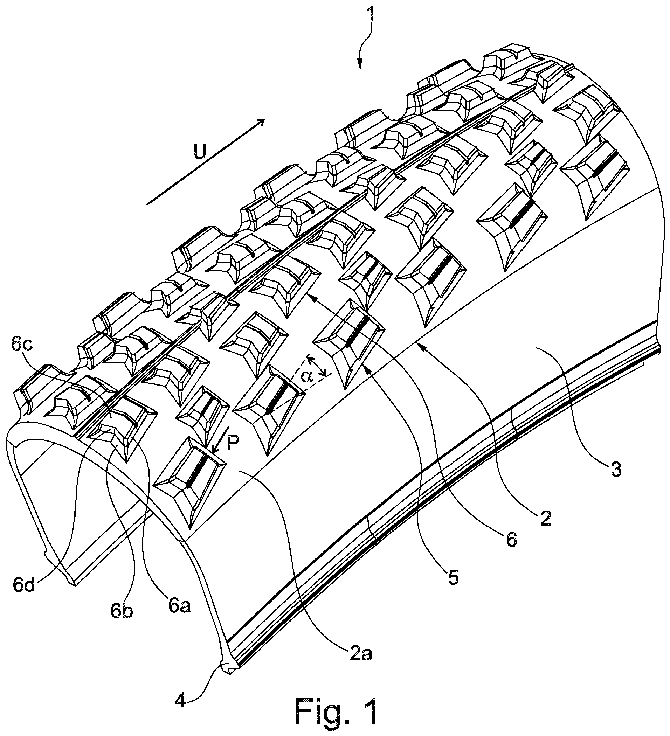

Fig. 1 zeigt von einem Fahrradreifen 1 einen profilierten Laufstreifen 2, Seitenwände 3 und Teilbereiche von Wulstbereichen 4. Nicht dargestellt sind beispielsweise die üblicherweise vorgesehene, mit einer Festigkeitsträgerlage versehene Karkasse und Wulstkerne in den Wulstbereichen 4, welche von der Karkasse umschlungen sind.

Der in Fig. 1 gezeigte Fahrradreifen 1 weist ein Stollenprofil im Laufstreifen 2 auf und ist insbesondere für die Fahrradkategorien GRAVEL und MTB geeignet und vorgesehen. Der Laufstreifen 2 ist ein laufrichtungsgebundener Laufstreifen, das heißt, dass der Fahrradreifen 1 derart am Rad zu montieren ist, dass bei Vorwärtsfahrt eine bestimmte Abrollrichtung des Reifens gegeben ist, die in Fig. 1, 2 und 3 jeweils durch den Pfeil U gekennzeichnet ist.

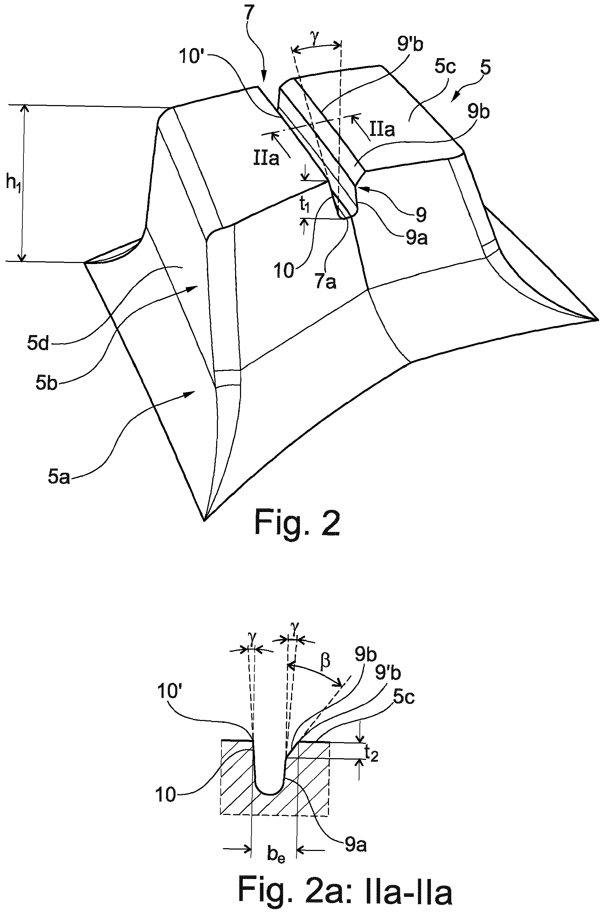

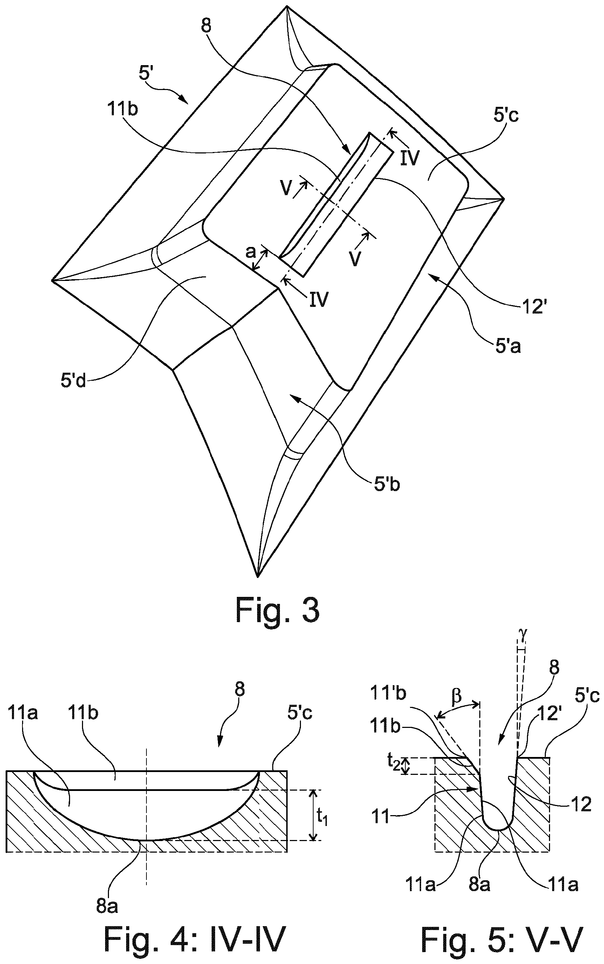

Das Stollenprofil des Laufstreifens 2 weist je eine schulterseitig verlaufende Reihe aus schulterseitigen Stollen 5 und weiter laufstreifeninnenseitig positionierten mittigen Stollen 6 auf. Fig. 3 zeigt eine Variante eines schulterseitigen Stollen 5`. Die Stollen 5, 5' weisen üblicherweise ein größeres Gummivolumen auf als die mittigen Stollen 6. Die Laufstreifenbereiche zwischen den Stollen 5, 6 sind unstrukturiert und bilden eine Laufstreifenbasisfläche 2a. Die Figuren zeigen die Stollen 5, 5', 6 in schematischen Strichdarstellungen mit scharfkantigen Konturen, wobei am vulkanisierten Reifen das Gummimaterial dafür sorgt, dass die Konturen und Übergänge zumeist und üblicherweise kaum merkbar gerundet sind. Sowohl die mittigen Stollen 6 als auch die schulterseitigen Stollen 5, 5' weisen bei der gezeigten Ausführung jeweils einen Stollenkörper 5b, 5'b und 6b und einen Stollensockel 5a, 5'a, 6a auf, welcher an der Laufstreifenbasisfläche 2a eine den jeweiligen Stollen 5, 5` 6 umlaufende, niedrige, in die Laufstreifenbasisfläche 2a übergehende und flach auslaufende Verbreiterung ist. Die Stollen 5, 5', 6 weisen, jeweils in vertikaler Richtung zur Laufstreifenbasisfläche 2a ermittelt eine Höhe h₁ (nur in Fig. 2 eingezeichnet) von 2,00 mm bis 12,00 mm, insbesondere von 4,00 mm bis 8,00 mm auf. Die sonstigen Abmessungen der Stollen 5, 5', 6 entsprechen den für Stollen in Stollenprofilen üblichen Abmessungen.

Die ansonsten im Wesentlichen klotz- oder quaderartig gestalteten Stollen 5, 5' 6 weisen jeweils eine parallel oder weitgehend parallel zur Laufstreifenbasisfläche 2a verlaufende Deckfläche 5c, 5'c, 6c und seitliche Flanken 5d, 5'd, 6d auf, welche senkrecht zur Laufstreifenbasisfläche 2a oder unter einem Winkel von bis zu 30° relativ zu einer Senkrechten auf die Laufstreifenbasisfläche 2a und dabei zum Stollensockel 5a, 5'a, 6a nach außen abfallend verlaufen. An der Deckfläche 5c der Stollen 5 ist jeweils mittig ein durchquerenden Einschnitt 7, an der Deckfläche 5'c der Stollen 5' ein innerhalb der Deckfläche 5`c endender Einschnitt 8 ausgebildet.

Fig. 2 zeigt eine Sicht auf einen schulterseitigen Stollen 5 gemäß dem Pfeil P der Fig. 1. Die die Stollen 5 durchquerenden Einschnitte 7 erstrecken sich gerade und sämtlich gleichermaßen unter einem Winkel α von 0° bis 45 °, insbesondere 10° bis 30°, zur Abrollrichtung bei Vorwärtsfahrt in Richtung zur Laufstreifenmitte geneigt. Jeder Einschnitt 7 weist einen Einschnittgrund 7a auf, welcher an seiner tiefsten Stelle eine in vertikaler Richtung zur Laufstreifenbasisfläche 2a ermittelte Tiefe t₁ von 0,80 mm bis 2,00 mm, insbesondere 1,00 mm bis 1,50 mm, aufweist. Die Tiefe t₁ ist um mindestens 0,50 mm geringer als die Höhe h₁. Bevorzugt ist die Tiefe t₁ über die Erstreckung des Einschnittes 7 konstant. Wie insbesondere Fig. 2a zeigt ist der Einschnitt 7 vom Einschnittgrund 7a ausgehend von einer laufstreifeninnenseitigen Einschnittwand 9 und einer laufstreifenaußenseitigen Einschnittwand 10 begrenzt. Die Einschnittwand 10 verläuft vom Einschnittgrund 7a ausgehend bis zur Deckfläche 5c unter einem konstanten Winkel γ von 0° bis 15°, bei einem Winkel größer 0° daher in Richtung zur Laufstreifenaußenseite geneigt und endet an der Deckfläche 5c mit einer Kante 10`. Die der Einschnittwand 10 gegenüberliegende Einschnittwand 9 setzt sich, vom Einschnittgrund 7a ausgehend aus einem Wandabschnitt 9a und einer Fase 9b, einer Schrägfläche zwischen dem Wandabschnitt 9a und der Deckfläche 5c, zusammen. Der Wandabschnitt 9 verläuft analog zur gegenüber befindlichen Einschnittwand 10 unter einem Winkel γ zu einer Senkrechten auf die Laufstreifenbasisfläche 2a von 0° bis 15°, bei einem Winkel größer 0° daher zur Laufstreifeninnenseite geneigt und dann gemeinsam mit der Einschnittwand 10 unter Verbreiterung des Einschnittes 7 in Richtung Deckfläche 5c.

Die Fase 9b verläuft über die Erstreckung des Einschnittes 7 unter einem vorzugsweise konstanten Winkel β von 30° bis 50° zu einer Senkrechten auf die Deckfläche 5c geneigt, bedingt dadurch eine Verbreiterung des Querschnittes des Einschnittes 7 in Richtung zur und nahe der Deckfläche 5c und endet an der Deckfläche 5c mit einer Fasenkante 9`b. Die Fase 9b reicht, senkrecht zur Deckfläche 5c ermittelt, bis in eine über die Erstreckung des Einschnittes 7 vorzugsweise konstante Tiefe t₂ von 0,30 mm bis 0,50 mm. Die Ausgestaltung des Einschnittes 7 ist ferner derart, dass der Einschnitt 7 an der Deckfläche 5c eine Breite bₑ, ermittelt als lichter Abstand der an der Deckfläche 5c befindlichen Fasenkante 9b' von der an der Deckfläche 5c befindlichen Kante 10` der Einschnittwand 10, von 0,80 mm bis 1,20 mm aufweist.

In schulterseitigen Stollen 5 sind die daher Einschnitte 7 an den laufstreifeninnenseitigen Einschnittwänden 9 mit Fasen 9b versehen.

Bei der in Fig. 1 gezeigten Ausführung sind die mittigen Stollen 6 mit herkömmlich gestalteten Einschnitten - Einschnitten ohne Fasen - versehen. Bei weiteren Ausführungen sind auch mittige Stollen 6 von Einschnitten 7 durchquert, bevorzugt von solchen, die sich unter Winkeln größer 45° (größer ± 45°) zur Abrollrichtung bei Vorwärtsfahrt (Pfeil U) erstrecken. Die mit der Fase versehene Einschnittwand ist dabei der Abrollrichtung abgewandt, sodass die Fasenkante 9'b jeweils bezogen auf die Abrollrichtung nach der Kante 10' in den Untergrund eintritt.

Der an der Deckfläche 5'c des in Fig. 3 gezeigten schulterseitigen Stollens 5' ausgebildete Einschnitt 8 endet innerhalb der Deckfläche 5`c, wobei seine Enden zu den jeweils benachbarten Kanten der Deckfläche 5' einen Abstand a₁ aufweisen, welcher von der Mitte der Einschnittenden rechtwinkelig zur jeweiligen Kante ermittelt in der Größenordnung von 2,00 mm bis 4,00 mm beträgt.

Fig. 4 zeigt anhand eines mittigen Längsschnittes durch den Einschnitt 8 eine Sicht zur und auf die eine Einschnittwand 11, Fig. 5 zeigt einen Querschnitt durch den Einschnitt 8 im Bereich der Mitte seiner Längserstreckung. Wie Fig. 4 zeigt, weist der Einschnitt 8 einen Einschnittgrund 8a auf, welcher entlang der Längserstreckung des Einschnittes 8 bezüglich der Einschnittmitte symmetrisch bogenförmig verläuft, derart, dass der Einschnittgrund 8a an den beiden Einschnittenden an der Deckfläche 5'c endet. In seiner Mitte besitzt daher der Einschnitt 8 seine größte Tiefe t₁, welche 0,80 mm bis 2,00 mm, insbesondere 1,00 mm bis 1,50 mm, beträgt. Die Schnittdarstellungen in Fig. 4 und Fig. 5 lassen erkennen, dass sich die Einschnittwand 11 beginnend beim Einschnittgrund 8a aus einem Wandabschnitt 11a und einer Fase 11b zusammensetzt, die an den Einschnittenden gemeinsam mit dem Einschnittgrund 8a an der Deckfläche 5`c ausläuft. Die gegenüberliegende Einschnittwand 12 verläuft unter dem Winkel γ von 0° bis 15°, bei einem Winkel größer 0° daher in Richtung zur Laufstreifenaußenseite geneigt und endet an der Deckfläche 5`c mit einer Kante 12'.

Wie Fig. 5 zeigt, verläuft der Wandabschnitt 11a senkrecht zur Deckfläche 5`c oder unter dem Winkel γ von bis zu 15° unter Verbreiterung des Einschnittes 8 Richtung Deckfläche 5'c. Die Fase 11b weist an der Deckfläche 5'c eine Fasenkante 11'b auf, reicht in der Einschnittmitte bis in die Tiefe t₂ von 0,30 mm bis 0,50 mm und ist unter dem Winkel β zu einer Senkrechten auf die Deckfläche 5`c geneigt, welcher 30° bis 60°, insbesondere etwa 45°, beträgt.

Stollen mit Einschnitten 7, 8, wie anhand der Figuren beschrieben, können in sämtlichen Positionen am Laufstreifen des Fahrradreifens mit unterschiedlicher Neigung ihrer Erstreckung relativ zur Umfangsrichtung vorgesehen sein. Nachdem der Laufstreifen des Fahrradreifens, wie bereits erwähnt, laufrichtungsgebunden gestaltet ist, ist ein Fahrradreifen mit einem derartigen Laufstreifen unter Bedachtnahme auf die Abrollrichtung bei Vorwärtsfahrt am Fahrrad zu montieren. In Schulterstollen sind die Einschnitte insbesondere derart an der Deckfläche ausgebildet, dass sie unter einem spitzen Winkel von bis zu 45°, in Richtung zur Laufstreifenmitte geneigt verlaufen, wobei die Fasen an den weiter laufstreifeninnenseitig befindlichen Einschnittwänden ausgebildet sind.

Die schulterseitig vor allem bei Kurvenfahrt für einen guten Griff des Laufstreifens auf unbefestigtem Untergrund besonders wichtigen laufstreifenaußenseitigen Kanten der Einschnitte, welche die "aktiven" Kanten der Einschnitte sind, werden durch die Fasen an den gegenüberliegenden Kanten etwas freigelegt und können dadurch ihre Wirkung zur Erzeugung von Griff deutlich erhöhen.

Auf mittigen Stollen ist es besonders vorteilhaft, wenn die Einschnitte entweder in axialer Richtung oder unter einem beliebigen Winkel zur axialen Richtung, insbesondere unter einem Winkel von kleiner 45° orientiert ausgebildet sind. In diesen Einschnitten ist jeweils die Kante, mit welcher der Reifen beim Abrollen bei Vorwärtsfahrt zuerst in den Untergrund eintritt die aktive Kante, also jene Kante, die keine Fase aufweist.

Durch derartige Anordnungen bzw. Ausgestaltungen der Einschnitte in mittigen Stollen wird vor allem die Bremsperformance des Fahrradreifens positiv beeinflusst bzw. verbessert.

Bei einer alternativen, gesondert nicht dargestellten Ausführung ist keine Fase vorgesehen, sondern die gesamte Einschnittwand verläuft unter einem Winkel von 30° bis 60° zu einer Senkrechten auf die Deckfläche des jeweiligen Stollens, die gegenüberliegende Einschnittwand entweder senkrecht zur Deckfläche oder unter einem Winkel von bis zu 15°.

Die Erfindung ist zwar anhand eines Stollenprofils und anhand von Stollen dargestellt und beschrieben, ist jedoch bei allen Arten von Fahrradreifen-Laufstreifen mit beliebig gestalteten Profilpositiven und zwischen diesen ausgebildeten Profilnegativen, beispielsweise Rillen, anwendbar und vorteilhaft.

### Bezugszeichenliste

- 1: Fahrradreifen
- 2: Laufstreifen
- 2a: Laufstreifenbasisfläche
- 3: Seitenwand
- 4: Wulstbereich
- 5, 5', 6: Stollen
- 5a, 5'a, 6a: Stollensockel
- 5b, 5'b, 6b: Stollenkörper
- 5c, 5'c, 6c: Deckfläche
- 5d, 5'd, 6d: Flanke
- 7, 8: Einschnitt
- 7a, 8a: Einschnittgrund
- 9, 10: Einschnittwand (Einschnitt 7)
- 10': Kante
- 9a: Wandabschnitt
- 9b: Fase
- 9'b: Fasenkante
- 11: Einschnittwand
- 11a: Wandabschnitt
- 11b: Fase
- 11'b: Fasenkante
- 12: Einschnittwand
- 12': Kante
- α, β, γ: Winkel
- a₁: Abstand
- bₑ: Breite
- h₁: Höhe
- P: Pfeil
- t₁, t₂: Tiefe
- U: Pfeil Abrollrichtung

## Patentansprüche

1. Fahrradreifen (1) mit einem laufrichtungsgebunden gestalteten profilierten Laufstreifen (2) mit einer Profilierung aus Profilpositiven (5, 5') mit Außenflächen (5c, 5'c, 6c), die beim Abrollen des Reifens mit dem Untergrund in Kontakt kommen, und aus zwischen den Profilpositiven (5, 5`) befindlichen Profilnegativen (2a), wobei Profilpositive (5, 5`) vorhanden sind, auf deren Außenflächen (5c, 5'c, 6c) jeweils zumindest ein Einschnitt (7, 8) ausgebildet ist, welcher einen Einschnittgrund (7a, 8a) und zwei Einschnittwände (9, 10, 11, 12) aufweist,
**dadurch gekennzeichnet,**
**dass** Profilpositive (5, 5`, 6) mit Einschnitten (7, 8) erster Art und/oder Profilpositive (5, 5`, 6) mit Einschnitten (7, 8) zweiter Art vorhanden sind, wobei sich die Einschnitte (7, 8) erster Art zur Umfangsrichtung des Laufstreifens unter einem Winkel (α) von bis zu 45° erstrecken und an der Außenfläche (5c, 5'c, 6c) jeweils eine laufstreifeninnenseitige, passive Kante (9'b, 11'b) und eine laufstreifenaußenseitige, aktive Kante (10`, 12`) aufweisen, wobei sich die Einschnitte (7, 8) zweiter Art zur Umfangsrichtung unter einem Winkel > 45° erstrecken und an der Außenfläche (5c, 5'c, 6c) jeweils eine beim Abrollen des Reifens bei Vorwärtsfahrt zuerst in den Untergrund eintretende einlaufende aktive Kante (10`, 12') und eine auslaufende passive Kante (9'b, 11'b) aufweisen, wobei entweder
bei Einschnitten (7, 8) erster Art jeweils an der laufstreifeninnenseitigen Kante (9'b, 11'b) und bei Einschnitten (7, 8) zweiter Art an der auslaufenden Kante eine Fase (9b, 11b) ausgebildet ist
oder
bei Einschnitten (7, 8) erster Art jeweils die an die laufstreifeninnenseitige Kante (9'b, 11'b) und bei Einschnitten (7, 8) zweiter Art jeweils die an die auslaufende Kante (9'b, 11'b) anschließende Einschnittwand (9, 11) insgesamt als eine Schrägfläche ausgebildet ist,
wobei die Fasen (9b, 11b) und die Schrägflächen jeweils unter einem Winkel (β) von 30° bis 60° zu einer Senkrechten auf die jeweilige Außenfläche (5c, 5'c, 6c) verlaufen.

2. Fahrradreifen (1) nach Anspruch 1, **dadurch gekennzeichnet, dass** die Einschnitte (7, 8), in Draufsicht betrachtet, an der Außenfläche (5c, 5'c, 6c) parallel zueinander und gerade verlaufende Kanten (9'b, 10', 11'b, 12') aufweisen.

3. Fahrradreifen (1) nach Anspruch 1 oder 2, **dadurch gekennzeichnet, dass** die Einschnitte (7, 8) an der Außenfläche (5c, 5'c, 6c) eine Breite (bₑ) von 0,80 mm bis 1,20 mm aufweisen.

4. Fahrradreifen (1) nach einem der Ansprüche 1 bis 3, **dadurch gekennzeichnet, dass** Profilpositive (5, 6) vorhanden sind, an welchen die Einschnitte (7) die Außenflächen (5c, 6c) durchqueren.

5. Fahrradreifen (1) nach einem der Ansprüche 1 bis 4, **dadurch gekennzeichnet, dass** Profilpositive (5, 6) vorhanden sind, an welchen die Einschnitte (7) innerhalb der (5'c, 6c) Außenflächen enden.

6. Fahrradreifen (1) nach einem der Ansprüche 1 bis 5, **dadurch gekennzeichnet, dass** Einschnitte (7, 8) erster Art in schulterseitigen Profilpositiven (5, 5') ausgebildet sind.

7. Fahrradreifen (1) nach einem der Ansprüche 1 bis 6, **dadurch gekennzeichnet, dass** die Einschnitte (7, 8) in schulterseitigen Profilpositiven (5, 5') derart bezüglich der Umfangsrichtung geneigt verlaufen, dass die laufstreifeninnenseitigen Enden ihrer Kanten (9'b, 10', 11'b, 12`) beim Abrollen des Reifens bei Vorwärtsfahrt zuerst in den Untergrund eintreten.

8. Fahrradreifen (1) nach einem der Ansprüche 1 bis 5, **dadurch gekennzeichnet, dass** Einschnitte (7, 8) zweiter Art in mittigen Profilpositiven (6) ausgebildet sind.

9. Fahrradreifen (1) nach Anspruch 5, **dadurch gekennzeichnet, dass** der Einschnittgrund (8a) von innerhalb der Außenflächen (5'c) endenden Einschnitten (8) entlang der Längserstreckung der Einschnitte (8) bezüglich der Einschnittmitte symmetrisch bogenförmig verläuft, derart, dass der Einschnittgrund (8a) an den beiden Einschnittenden an der Außenfläche (5'c) endet bzw. ausläuft.

10. Fahrradreifen (1) nach Anspruch 5 oder 9, **dadurch gekennzeichnet, dass** die Fasen (11b), welche an Kanten (11'b) von innerhalb der Außenflächen (5'c) endenden Einschnitten (8) ausgebildet sind, jeweils an den Einschnittenden gemeinsam mit dem Einschnittgrund (8a) an der Außenfläche (5'c) auslaufen.

11. Fahrradreifen (1) nach einem der Ansprüche 1 bis 10, **dadurch gekennzeichnet, dass** die Fasen (9b, 11), jeweils von der Außenfläche (5c, 5'c) in senkrechter Richtung ermittelt, bis in eine maximale Tiefe (t₂) von 0,30 mm bis 0,50 mm reichen.

12. Fahrradreifen (1) nach einem der Ansprüche 1 bis 11, **dadurch gekennzeichnet, dass** die Einschnitte (7, 8) von den Außenflächen (5c, 5'c, 6c) in senkrechter Richtung ermittelt, jeweils bis in eine maximale Tiefe (t₁) von 0,80 mm bis 2,00 mm, insbesondere von 1,00 mm bis 1,50 mm reichen.

13. Fahrradreifen (1) nach einem der Ansprüche 1 bis 12, **dadurch gekennzeichnet, dass** die der Schrägfläche bzw. der mit der Fase (9b, 11b) versehene Einschnittwand (9, 11) gegenüberliegende Einschnittwand (10, 12) senkrecht zur Außenfläche (5c, 5'c) oder unter einem Winkel (γ) von insbesondere bis zu 15° zu einer Senkrechten auf die Außenfläche (5c, 5'c) verläuft.

14. Fahrradreifen (1) nach einem der Ansprüche 1 bis 13, **dadurch gekennzeichnet, dass** an die Fase (9b, 11b) ein bis zum Einschnittgrund (7a, 8a) reichender Wandabschnitt (9a, 11a) anschließt, welcher senkrecht zur Außenfläche (5c, 5'c) oder unter einem Winkel (γ) von insbesondere bis zu 15° zu einer Senkrechten auf die Außenfläche (5c, 5'c) verläuft.

15. Fahrradreifen (1) nach einem der Ansprüche 1 bis 14, **dadurch gekennzeichnet, dass** die Profilpositive voneinander beabstandete Stollen (5, 5`, 6) sind, zu welchen Schulterstollen (5, 5') und mittige Stollen (6) gehören, wobei die Profilnegative von einer zwischen den Stollen (5, 5`, 6) vorhandenen Laufstreifenbasisfläche (2a) gebildet sind, und wobei die Stollen (5, 5`, 6) jeweils eine parallel oder im Wesentlichen parallel zur Laufstreifenbasisfläche (2a) verlaufende, die Außenfläche bildende Deckfläche (5c, 5'c, 6c) aufweisen.
